# EUROPEAN PATENT SPECIFICATION

(11) **EP 3 437 708 B1**
(45) Date of publication and mention of the grant of the patent: **22.07.2020**
(21) Application number: 18185998.4
(22) Date of filing: 27.07.2018
(51) Int. Cl.: B01D 29/35, B01D 29/46, B01D 29/64, B30B 9/12, B01D 29/82

(54) **SOLID-LIQUID SEPARATOR**
FEST-FLÜSSIG-SEPARATOR
SÉPARATEUR SOLIDE/LIQUIDE

(30) Priority: 04.08.2017 JP 2017151672
(43) Date of publication of application: 06.02.2019
(73) Proprietor: Tsurumi Manufacturing Co., Ltd., Tsurumi-ku, Osaka-shi Osaka 538-0053 (JP)
(72) Inventor: NAKANO, Tsuyoshi, Osaka, 538-0053 (JP); OOMURA, Masahiro, Osaka, 538-0053 (JP)
(74) Representative: Viering, Jentschura & Partner mbB Patent- und Rechtsanwälte

(56) References cited:
- EP-A1- 0 581 965
- CN-A- 103 895 250
- JP-A- H0 473 285
- JP-A- S5 671 600
- JP-A- S60 147 299
- JP-A- 2003 136 289
- JP-U- S5 247 586
- US-B1- 6 187 180

## Description

### BACKGROUND OF THE INVENTION

### Field of the Invention

The present invention relates to a solid-liquid separator, and more particularly, it relates to a solid-liquid separator including a layered filter body.

### Description of the Background Art

A solid-liquid separator including a layered filter body is known in general, as disclosed in Japanese Patent Laid-Open No. 5-228695, for example.

Japanese Patent Laid-Open No. 5-228695 discloses a solid-liquid separator including a screw and a layered filter body configured to surround the screw. In the solid-liquid separator, an inflow port for an object to be processed is provided in the vicinity of one end of the screw, and a discharge port for the object to be processed is provided in the vicinity of the other end of the screw.

However, in the conventional solid-liquid separator as disclosed in Japanese Patent Laid-Open No. 5-228695, depending on the properties of the object to be processed, solid-liquid separation processing is disadvantageously substantially completed on the way (in an upstream portion of the screw) from the inflow port to the discharge port, and substantially no solid-liquid separation processing is disadvantageously performed from the time when the solid-liquid separation processing is substantially completed to the time when the discharge port (a downstream portion of the screw) is reached. That is, in the conventional solid-liquid separator, a portion in which the solid-liquid separation processing is performed is limited to a portion of the entire solid-liquid separator in a length direction, and it has been desired to further increase the throughput of the object to be processed by effectively utilizing the entire solid-liquid separator.

### SUMMARY OF THE INVENTION

The present invention has been proposed in order to solve the aforementioned problem, and an object of the present invention is to provide a solid-liquid separator capable of increasing the throughput of an object to be processed by effectively utilizing the entire solid-liquid separator.

In order to attain the aforementioned object, a solid-liquid separator according to an aspect of the present invention includes a screw including a rotary shaft and configured to feed a supplied object to be processed with rotation of the rotary shaft, a main object-to-be-processed supply port for the object to be processed disposed in the vicinity of one end of the screw, a discharge port for the object to be processed provided in the vicinity of the other end of the screw, a drive configured to rotate the rotary shaft, a layered filter body including a plurality of fixed plates configured to surround the screw and a plurality of movable plates each of which is disposed between adjacent ones of the plurality of fixed plates, and including a filtration groove between the adjacent fixed plates, and a tubular first pipe member including a sub object-to-be-processed supply port for the object to be processed and disposed in the middle of the layered filter body. The solid-liquid separator further includes a pair of flanges configured to sandwich the first pipe member from both sides in an axial direction of the rotary shaft in a contact state. According to this configuration, the first pipe member can be easily attached via the flanges.

As described above, the solid-liquid separator according to this aspect of the present invention includes the tubular first pipe member including the sub object-to-be-processed supply port for the object to be processed and disposed in the middle of the layered filter body. Accordingly, the object to be processed can be additionally supplied to the layered filter body through the sub object-to-be-processed supply port downstream of the main object-to-be-processed supply port, and thus the solid-liquid separator can perform solid-liquid separation processing substantially throughout the layered filter body. Therefore, the throughput of the object to be processed can be increased by effectively utilizing the entire solid-liquid separator. In addition, the object to be processed can be additionally supplied in the middle of the layered filter body, and thus the fluidity of the object to be processed that has decreased due to the solid-liquid separation processing can be improved. Consequently, it is possible to significantly reduce or prevent blockage of the solid-liquid separator (clogging of the layered filter body) due to the object to be processed.

In the aforementioned solid-liquid separator according to this aspect, an opening area of the sub object-to-be-processed supply port is preferably equal to or larger than an opening area of the main object-to-be-processed supply port. According to this configuration, a relatively large additional supply of the object to be processed can be ensured, and thus the throughput can be increased between the main object-to-be-processed supply port for the object to be processed and the discharge port for the object to be processed, and the solid-liquid separation processing can be more effectively performed.

One of the pair of flanges is preferably configured to face one of the plurality of fixed plates, and the other of the pair of flanges is preferably configured to face the movable plate. According to this configuration, the first pipe member can be disposed at an arbitrary position between the fixed plate and the movable plate without changing the order in which the fixed plates and the movable plates are alternately aligned. Furthermore, a position at which the first pipe member is disposed can be easily changed to a position between another fixed plate and another movable plate.

In the aforementioned solid-liquid separator according to this aspect, the first pipe member preferably integrally includes a tubular first portion configured to extend in an axial direction of the rotary shaft and a tubular second portion including the sub object-to-be-processed supply port and configured to protrude and extend from an outer surface of the first portion in a direction that intersects with the axial direction. According to this configuration, the object to be processed can be easily fed from the second portion configured to extend in the direction away from the layered filter body to the first portion.

The aforementioned solid-liquid separator according to this aspect preferably includes a tubular second pipe member including an auxiliary supply port for a flocculant or washing water and disposed in the middle of the layered filter body in addition to the first pipe member. According to this configuration, when the flocculant is supplied, the flocculant can be supplied to the object to be processed in the middle of the layered filter body, and thus the flocculant is injected into the object to be processed, the moisture content of which has been lowered to a predetermined value while the fluidity is maintained, such that the opportunity of contact between particles of solids of the object to be processed and particles of the flocculant can be increased, flocculating treatment can be more effectively performed, and the solid-liquid separation processing for the object to be processed can be more effectively performed. In addition, when the washing water is supplied, the layered filter body can be washed from the inside of the layered filter body, and thus the layered filter body can be effectively washed.

In this case, the second pipe member preferably includes the auxiliary supply port through which the flocculant is supplied, and is preferably disposed in the vicinity of an end of the rotary shaft on the discharge port side, and an agitation region in which the object to be processed is agitated by the screw is preferably provided on the discharge port side of the second pipe member. According to this configuration, before the object to be processed reaches the discharge port, the flocculant and the object to be processed can be agitated in the agitation region, and thus the object to be processed on which the flocculating treatment has been performed can be discharged through the discharge port.

In the aforementioned solid-liquid separator according to this aspect, the first pipe member is preferably disposed at a position separated from an end of the layered filter body on the main object-to-be-processed supply port side by a distance of one-third or more and one-half or less of an entire length of the layered filter body in an axial direction of the rotary shaft. According to this configuration, the object to be processed can be additionally supplied at the position separated from the end of the layered filter body on the main object-to-be-processed supply port side by the distance of one-third or more and one-half or less of the entire length of the layered filter body, which is a position at which the solid-liquid separation processing is substantially completed, and thus the throughput of the object to be processed can be further increased by effectively utilizing the entire solid-liquid separator. In addition, it is possible to improve the fluidity of the object to be processed and further significantly reduce or prevent blockage of the solid-liquid separator (clogging of the layered filter body) due to the object to be processed.

The above and other elements, features, steps, characteristics and advantages of preferred embodiments will become more apparent from the following detailed description of the preferred embodiments with reference to the attached drawings.

### BRIEF DESCRIPTION OF THE DRAWINGS

Fig. 1 is a side view showing the overall configuration of a screw type concentration device according to a first embodiment of the present invention.
Fig. 2 is a schematic sectional view showing a pipe member of the screw type concentration device according to the first embodiment of the present invention.
Fig. 3 is a perspective view showing a spacer of the screw type concentration device according to the first embodiment of the present invention.
Fig. 4 is a perspective view showing the pipe member of the screw type concentration device according to the first embodiment of the present invention.
Fig. 5 is a side view showing the overall configuration of the screw type concentration device and a rotary-body type dehydrator according to the first embodiment of the present invention.
Fig. 6 is an exploded perspective view of a layered rotary filter body of the rotary-body type dehydrator according to the first embodiment of the present invention.
Fig. 7 is a side view showing the overall configuration of a screw type concentration device according to a second embodiment of the present invention.
Fig. 8 is a side view showing the overall configuration of a screw type dehydrator according to a third embodiment of the present invention.

### DESCRIPTION OF THE PREFERRED EMBODIMENTS

Embodiments of the present invention are hereinafter described with reference to the drawings.

### [First Embodiment]

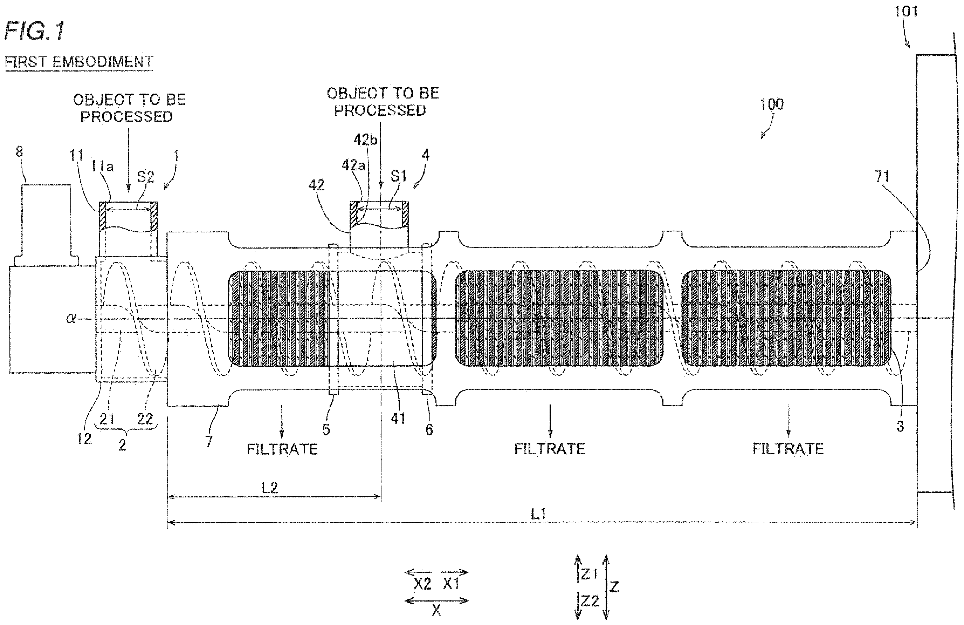

A first embodiment of the present invention is now described with reference to Figs. 1 to 6.

### (Configuration of Screw Type Concentration Device)

As shown in Fig. 1, a screw type concentration device 100 according to the first embodiment of the present invention includes a supply member 1 including a main supply port 11a for an object to be processed, a screw 2, a layered filter body 3, a first pipe member 4 including a sub supply port 42a for the object to be processed, flanges 5 and 6 respectively provided at both ends of the first pipe member 4 in a direction X described later, and an outer frame 7 including a discharge port 71 for the object to be processed, and a motor 8. The screw 2 includes a rod-like rotary shaft 21 configured to linearly extend. The rotary shaft 21 is configured to extend in a substantially horizontal direction. The screw type concentration device 100 is an example of a "solid-liquid separator" in the claims. The main supply port 11a is an example of a "main object-to-be-processed supply port" in the claims. The sub supply port 42a is an example of a "sub object-to-be-processed supply port" in the claims. The motor 8 is an example of a "drive" in the claims.

In the following description, the axial direction (a direction in which the screw 2 extends) of the rotary shaft 21 is defined as the direction X. Furthermore, in the direction X, a direction from the main supply port 11a toward the discharge port 71, i.e. a direction in which the object to be processed is moved by the screw 2, is defined as a direction X1, and the opposite direction is defined as a direction X2. In addition, an upward-downward direction is defined as a direction Z. A direction perpendicular to the direction X and the direction Z is defined as a direction Y.

The screw type concentration device 100 is configured to perform concentration processing mainly by gravity filtration on the object to be processed. In addition, the screw type concentration device 100 is configured to discharge the object to be processed on which the concentration processing has been performed and supply the same to a rotary-body type dehydrator 101 provided subsequent to the screw type concentration device 100. The rotary-body type dehydrator 101 is configured to perform dehydration processing mainly by squeezing filtration on the object to be processed on which the concentration processing has been performed.

Note that the gravity filtration denotes filtration for filtering out liquids (filtrates) through fine gaps or the like, for example, and more particularly filtration for separating solids from liquids by gravity that acts on the liquids of the object to be processed. In addition, the squeezing filtration denotes filtration for squeezing out liquids from the object to be processed by pressurizing (squeezing) the object to be processed.

The object to be processed is a mixture of water (liquids) and solids. For example, the object to be processed is sludge. The concentration processing denotes processing for lowering the moisture content of the flocculated object to be processed to a predetermined moisture content (about 94 to about 98%, for example, and preferably about 96%) while maintaining the fluidity of the object to be processed. In the screw type concentration device 100, the object to be processed is supplied from a flocculation equipment (not shown) that performs flocculating treatment at a stage prior to solid-liquid separation processing. The moisture content of the object to be processed, supplied from the flocculation equipment, is about 98.0 to about 99.5%, for example. The dehydration processing denotes processing for losing the fluidity of the object to be processed to reduce the volume of the object to be processed and further lowering the moisture content than in the concentration processing. The moisture content of the object to be processed is lowered to about 70 to about 88%, for example, by the dehydration processing. The object to be processed on which the dehydration processing has been performed is discharged as a dehydrated cake (not shown) from the rotary-body type dehydrator 101.

### <Consideration of Supply Member>

As shown in Fig. 1, the supply member 1 is a hollow tubular member. Specifically, the supply member 1 includes a cylindrical first portion 11 including the main supply port 11a at its upper end and configured to extend in the upward-downward direction (direction Z), and a second portion 12 integrally connected to the lower end of the first portion 11 and having an open X1 direction side. The main supply port 11a is provided in the vicinity of the end of the screw 2 on the X2 direction side. The end of the screw 2 on the X2 direction side is disposed inside the second portion 12. The motor 8 is disposed on the X2 direction side of the supply member 1.

### <Configuration of Screw>

As shown in Fig. 1, the screw 2 includes the rotary shaft 21 and a blade 22. The rotary shaft 21 passes through the second portion 12 in the direction X. The screw 2 is connected to the motor 8 at the end of the rotary shaft 21 in the direction X2, and is configured to rotate by receiving a drive force from the motor 8. The screw 2 is configured to feed the object to be processed, supplied through the main supply port 11a, in the direction X1 (to the rotary-body type dehydrator 101 side) by rotating the blade 22 with rotation of the rotary shaft 21. Furthermore, the rotary shaft 21 is configured to extend in a direction (direction X) in which the screw type concentration device 100 and the rotary-body type dehydrator 101 are aligned.

The blade 22 is provided on the outer peripheral surface of the rotary shaft 21. In addition, the blade 22 is configured to extend helically in the axial direction (direction X) of the rotary shaft 21. Furthermore, the blade 22 includes one continuous blade, and the pitches of the blade 22 in the axial direction (direction X) of the rotary shaft 21 are substantially equal to each other. Note that the screw 2 may include a plurality of divided blades.

### <Configuration of Layered Filter Body>

As shown in Fig. 1, the entire layered filter body 3 is configured to surround the screw 2 such that the screw 2 is disposed inside the layered filter body 3, and the layered filter body 3 has a tubular shape that extends in the direction X.

As shown in Fig. 1, the layered filter body 3 is configured to extend in the direction X from the vicinity of the end of the supply member 1 in the direction X1 to the vicinity of a contact surface between the screw type concentration device 100 and the rotary-body type dehydrator 101.

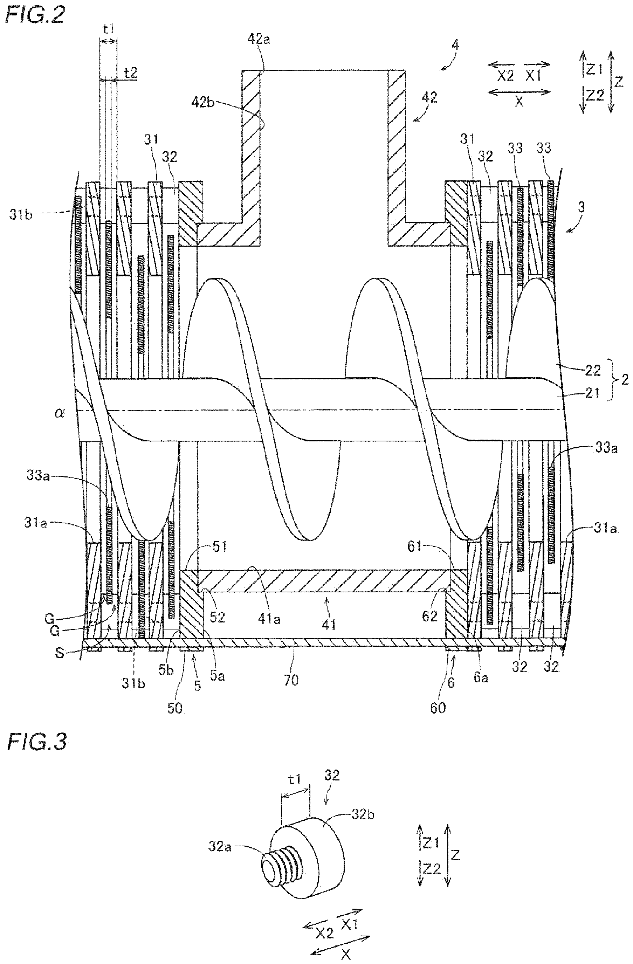

As shown in Fig. 2, the layered filter body 3 includes a plurality of fixed plates 31, a plurality of spacers 32, and a plurality of movable plates 33, and has a layered structure in which the fixed plates 31 and the movable plates 33 are alternately layered in the direction X.

### <Configuration of Fixed Plate>

As shown in Fig. 2, the fixed plates 31 each have an annular shape that extends in a direction substantially perpendicular to the direction X. That is, the fixed plates 31 include circular through-holes 31a that pass therethrough in the direction X at their centers. The fixed plates 31 are fixed by the outer frame 7 that contacts a plurality of portions of the outer edges of the fixed plates 31 so as not to move.

The screw 2 is passed through the through-holes 31a. The through-holes 31a each have a predetermined size such that the fixed plates 31 do not contact the rotary screw 2. In other words, the inner radius of each of the through-holes 31a is larger than a distance from the rotation center axis α of the screw 2 to the outermost edge of the blade 22 (a portion of the blade 22 that is most distant from the rotary shaft 21).

The fixed plates 31 include, in the vicinity of their outer edges, screw holes 31b that pass therethrough in the direction X and to which the spacers 32 are attached. A plurality of screw holes 31b are provided in one fixed plate 31 at a predetermined interval in the radial direction of the fixed plate 31.

### <Configuration of Spacer>

As shown in Fig. 3, each of the spacers 32 includes a male screw 32a configured to extend in the direction X and a columnar main body 32b configured to support one end of the male screw 32a from the X1 direction side. The main body 32b has a thickness t1 in the direction X.

As shown in Fig. 2, the spacers 32 are attached to the screw holes 31b from the X1 direction sides of the fixed plates 31. On the surfaces of the spacers 32 on the X1 direction side, other fixed plates 31 different from fixed plates 31 to which the spacers 32 are attached are disposed in a contact state. That is, the spacers 32 have a function of separating two fixed plates 31 adjacent to each other in the direction X from each other by a gap t1. The plurality of spacers 32 and the plurality of screw holes 31b are circumferentially provided in each of the fixed plates 31. The length of each of the male screws 32a (see Fig. 3) in the direction X is smaller than the thickness of each of the fixed plates 31.

### <Configuration of Movable Plate>

As shown in Fig. 2, the movable plates 33 each have an annular shape that extends in the direction substantially perpendicular to the direction X. That is, the movable plates 33 include circular through-holes 33a that pass therethrough in the direction X at their centers.

The screw 2 is passed through the through-holes 33a. The through-holes 33a each have a predetermined size such that the movable plates 33 can contact the rotary screw 2. In other words, the inner radius of each of the through-holes 33a is smaller than a distance from the rotation center axis α of the screw 2 to the outermost edge of the blade 22 (the portion of the blade 22 that is most distant from the rotary shaft 21). Each of the movable plates 33 is disposed between the two fixed plates 31 adjacent to each other in the direction X. The thickness t2 of each of the movable plates 33 in the direction X is smaller than an interval t1 (the thickness t1 of the main body 32b (see Fig. 3) of each of the spacers 32) between the two fixed plates 31 adjacent to each other in the direction X. Furthermore, unlike the fixed plates 31, the movable plates 33 are movable without being fixed by the outer frame 7 (see Fig. 1).

Specifically, as the screw 2 rotates, the movable plates 33 are moved (rotated) in a state where the movable plates 33 are eccentric in a direction perpendicular to the direction X and away from the rotation center axis α due to the blade 22, and each of the movable plates 33 is moved (oscillated) in the direction X by the blade 22 between the two fixed plates 31 that sandwich each of the movable plates 33.

### <Configurations of Filtration Groove and Filtrate Outflow Groove>

As shown in Fig. 2, filtration grooves S each having a gap t1 are formed between adjacent fixed plates 31 due to the spacers 32. Furthermore, filtrate outflow grooves G each having a gap (t1 - t2) are formed in portions of the filtration grooves S between the adjacent fixed plates 31 in the direction X excluding the movable plates 33.
The filtrate outflow grooves G are gap portions between the two fixed plates 31 disposed adjacent to each other in the direction X and the movable plates 33.

The screw type concentration device 100 is configured to rotate the screw 2 to allow a filtrate to pass through the filtration grooves S (filtrate outflow grooves G) and separate the liquids from the object to be processed. At this time, the screw type concentration device 100 is configured to be capable of continuously moving each of the movable plates 33 between the two fixed plates 31 by rotating the screw 2. Therefore, it is possible to significantly reduce or prevent clogging of the filtrate outflow grooves G (filtration grooves S). That is, the screw type concentration device 100 is configured to self-clean the filtrate outflow grooves G (filtration grooves S) .

### <Configuration of First Pipe Member>

As shown in Fig. 1, the first pipe member 4 is generally a member having a tubular shape and that additionally supplies the object to be processed to the screw type concentration device 100 in the middle of the layered filter body 3. Therefore, the first pipe member 4 is provided in the middle of the layered filter body 3.

Specifically, the first pipe member 4 is disposed closer to the main supply port 11a for the object to be processed than the discharge port 71 for the object to be processed. In addition, the first pipe member 4 is disposed at a position separated from the end of the layered filter body 3 on the main supply port 11a side by a distance L2 of approximately one-third of the entire length L1 of the layered filter body 3 in the axial direction (direction X) of the rotary shaft 21 (L2 ≈ (1/3)L1).

As shown in Fig. 2, the first pipe member 4 integrally includes a first portion 41 and a second portion 42.

The first portion 41 has a tubular shape and is configured to extend in the axial direction (direction X) of the rotary shaft 21. That is, the first portion 41 includes a circular through-hole 41a that passes therethrough in the direction X. The screw 2 is passed through the first portion 41 (through-hole 41a). The through-hole 41a has a predetermined size (inner diameter) such that the first portion 41 does not contact the rotary screw 2.

The second portion 42 is configured to protrude and extend from the outer surface of the first portion 41 in a direction that intersects with the axial direction (direction X) of the rotary shaft 21.

Specifically, the second portion 42 has a tubular shape. In addition, the second portion 42 is configured to extend in the upward-downward direction (direction Z). That is, the second portion 42 includes a circular through-hole 42b that passes therethrough in the direction Z. In addition, the lower end of the second portion 42 is integrally connected to the first portion 41. The second portion 42 is connected to a substantially central portion of the first portion 41 in the direction X. Therefore, the first pipe member 4 has an inverted T shape due to the first portion 41 and the second portion 42. The through-hole 42b of the second portion 42 communicates with the through-hole 41a of the first portion 41 from above inside the first pipe member 4.

As shown in Fig. 1, the sub supply port 42a is provided at the upper end of the second portion 42. A supply pipe (not shown) that supplies the object to be processed is connected to the sub supply port 42a (the upper end of the second portion 42). The opening area S1 of the sub supply port 42a is substantially equal to the opening area S2 of the main supply port 11a of the supply member 1. The opening area S1 denotes the inner opening area of an annular cross-section when the cross-section of the second portion 42 is acquired due to a flat surface that extends in the horizontal direction and crosses the second portion 42. The opening area S2 denotes the inner opening area of an annular cross-section when the cross-section of the first portion 11 of the supply member 1 is acquired due to a flat surface that extends in the horizontal direction and crosses the first portion 11.

### <Configuration of Flange>

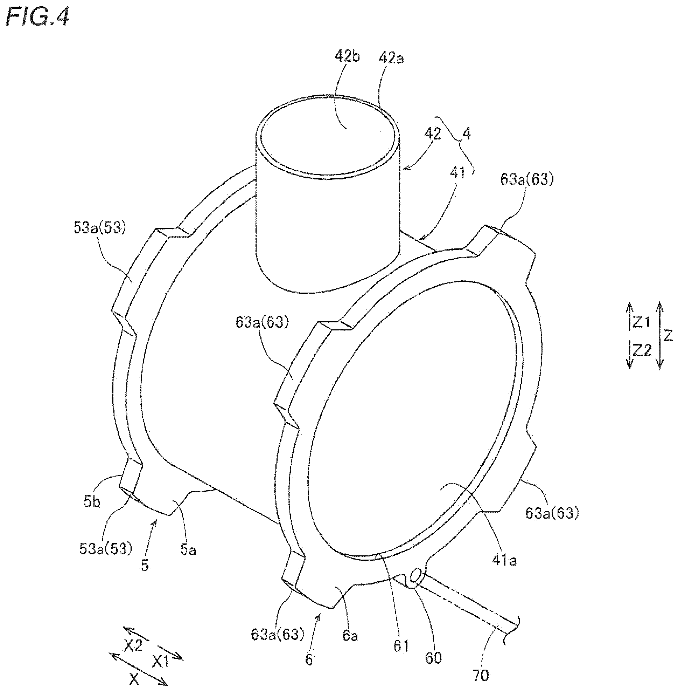

As shown in Fig. 4, the flanges 5 and 6 each have an annular shape and have the same shape. That is, the flanges 5 and 6 are paired. The flanges 5 and 6 are configured to sandwich, in a contact state, the first pipe member 4 from both sides in the axial direction (direction X) of the rotary shaft 21.

### <Configuration of Flange 5>

As shown in Fig. 2, the flange 5 is disposed on the X2 direction side of the first pipe member 4. The outer diameter (a size in the direction perpendicular to the direction X) of the flange 5 is larger than the outer diameter of the first portion 41 of the first pipe member 4.

As shown in Fig. 2, the flange 5 includes a circular through-hole 51 that passes therethrough in the direction X, a recess 52 provided in a side surface 5a on the first pipe member 4 side (X1 direction side) and recessed in the direction X2, and protrusions 53 (see Fig. 4) that contact the outer frame 7 (see Fig. 1).

The screw 2 is passed through the through-hole 51. The through-hole 51 has a predetermined size (inner diameter) such that the flange 5 does not contact the rotary screw 2.

The recess 52 has a shape along the outer surface of the end of the first portion 41 of the first pipe member 4 in the direction X2, and is fitted to the first portion 41. The flange 5 is fixed to the first pipe member 4 in a state where the flange 5 is fitted to the first pipe member 4. By way of example, the flange 5 is welded in a state where the flange 5 is fitted to the first pipe member 4, or is fixed to the first pipe member 4 by fixing members such as screws (not shown).

The flange 5 is configured to face a movable plate 33 in the direction X. Specifically, the movable plate 33 is configured to face the flange 5 on the side surface 5b of the flange 5 on the X2 direction side. That is, the flange 5 is provided adjacent in the direction X to the movable plate 33 of the fixed plates 31 and the movable plates 33 alternately disposed. On the side surface 5b of the flange 5, the spacers 32 each including the male screw 32a on the X2 direction side are disposed in contact with the side surface 5b. The spacers 32 that contact the flange 5 are fixed to the flange 5. By way of example, the spacers 32 are fixed to the flange 5 by fixing members such as screws (not shown).

As shown in Fig. 4, a plurality of protrusions 53 are provided. The protrusions 53 are configured to protrude from the outer edge of the flange 5 in the radial direction (the direction perpendicular to the direction X) of the flange 5. The plurality of protrusions 53 are disposed at equal angular intervals in the circumferential direction of the flange 5.

As shown in Fig. 4, each of the plurality of protrusions 53 has a contact surface 53a that contacts the outer frame 7 (see Fig. 1) at its outermost edge (a portion that is most distant from the rotation center axis α (see Fig. 2) of the screw 2 (see Fig. 2) in the radial direction). A plurality of contact surfaces 53a are positioned on a common circular arc with the rotation center axis α as the center.

At the lower end of the flange 5, a fixing portion 50 including a through-hole through which a round bar member 70 configured to extend in the direction X is passed is provided. The round bar member 70 is also passed through the fixed plates 31, and fixes the flange 5 and the fixed plates 31 to each other.

### <Configuration of Flange 6>

As shown in Fig. 2, the flange 6 has the same shape as the flange 5 as described above, and thus differences from the flange 5 are described below.

The flange 6 includes a through-hole 61, a recess 62, and protrusions 63 (see Fig. 4) each having a contact surface 63a. The flange 6 is configured to face a fixed plate 31 in the direction X. Specifically, the fixed plate 31 is configured to face the flange 6 in contact with the side surface 6a of the flange 6 on the X1 direction side. That is, the flange 6 is provided adjacent in the direction X to the fixed plate 31 of the fixed plates 31 and the movable plates 33 alternately disposed. The fixed plate 31 configured to contact the flange 6 is fixed to the flange 6. By way of example, the fixed plate 31 is fixed to the flange 6 by fixing members such as screws (not shown). At the lower end of the flange 6, a fixing portion 60 including a through-hole through which the round bar member 70 configured to extend in the direction X is passed is provided.

### <Configuration of Outer Frame>

As shown in Fig. 1, the outer frame 7 has a frame structure configured to surround the layered filter body 3 from the outside. The outer frame 7 comes into contact with the outer edges of the fixed plates 31, the contact surfaces 53a of the protrusions 53 of the flange 5, and the contact surfaces 63a of the protrusions 63 of the flange 6 such that the outer frame 7 fixes the layered filter body 3, the flange 5, the flange 6, and the first pipe member 4, to which the flanges 5 and 6 are fixed, to each other. Furthermore, at the end of the outer frame 7 in the direction X1 (in the vicinity of the end of the screw 2 in the direction X1), the discharge port 71 through which the object to be processed is discharged from the screw type concentration device 100 is provided. The object to be processed that has been discharged through the discharge port 71 is supplied to the rotary-body type dehydrator 101.

### (Configuration of Rotary-Body Type Dehydrator)

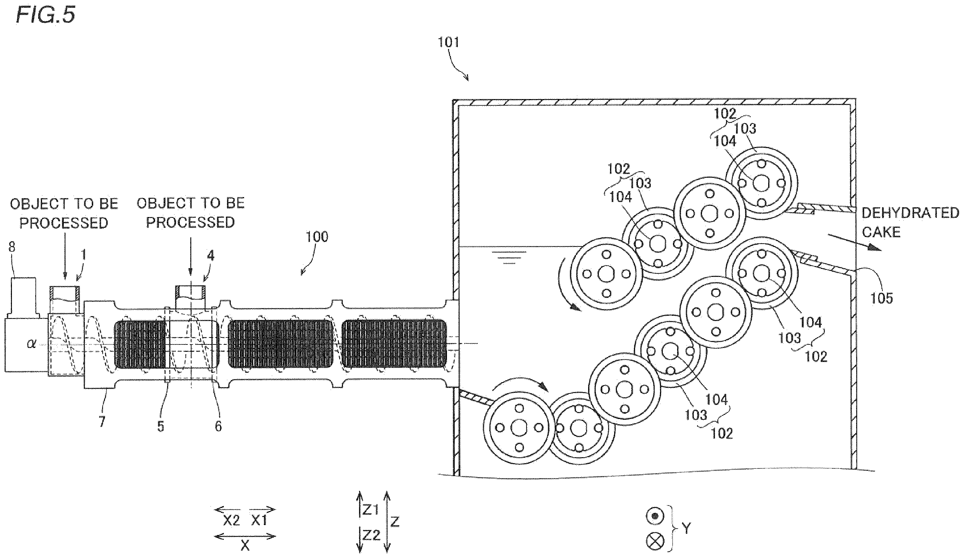

As shown in Fig. 5, the rotary-body type dehydrator 101 includes a plurality of rotary bodies 102 and motors (not shown) that drive the rotary bodies 102.

The rotary bodies 102 include layered rotary filter bodies 103 and rotary shafts 104 inserted through the layered rotary filter bodies 103 and configured to extend in the direction Y.

A plurality of layered rotary filter bodies 103 (rotary bodies 102) are disposed in two upper and lower rows toward a discharge port 105 to feed the object to be processed to the discharge port 105. Specifically, the layered rotary filter bodies 103 in the lower row are configured to rotate in the same direction (a clockwise direction in Fig. 5) to feed the object to be processed to the discharge port 105. The layered rotary filter bodies 103 in the upper row are configured to rotate in a direction (a counterclockwise direction in Fig. 5) opposite to that of the layered rotary filter bodies 103 in the lower row to feed the object to be processed to the discharge port 105.

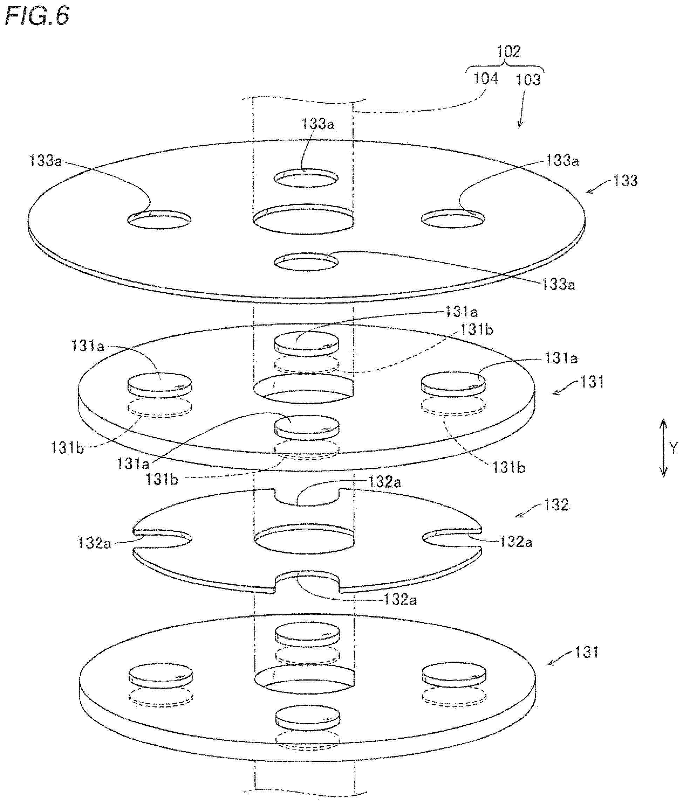

As shown in Fig. 6, the layered rotary filter bodies 103 include three types of annular filter pieces, which are a plurality of medium-diameter disc filter pieces 131, a plurality of small-diameter disc filter pieces 132, and a plurality of large-diameter disc filter pieces 133. In the layered rotary filter bodies 103, the large-diameter disc filter pieces 133 and the small-diameter disc filter pieces 132 are alternately disposed (layered) between the plurality of medium-diameter disc filter pieces 131 aligned in the direction Y.

The medium-diameter disc filter bodies 131 include protrusions 131a and protrusions 131b on one surface and another surface, respectively. The protrusion amount of the protrusions 131a is extremely large as compared with the protrusion amount of the protrusions 131b. The protrusions 131a and the protrusions 131b come into contact with each other such that filtration grooves (not shown) through which a filtrate is discharged are formed between adjacent medium-diameter disc filter pieces 131.

The small-diameter disc filter pieces 132 include cutouts 132a that engage with the protrusions 131a and the protrusions 131b.

The large-diameter disc filter pieces 133 include through-holes 133a into which the protrusions 131a and the protrusions 131b are fitted.

### (Effects of First Embodiment)

According to the first embodiment, the following effects can be obtained.

According to the first embodiment, as described above, the screw type concentration device 100 includes the tubular first pipe member 4 including the sub supply port 42a for the object to be processed and disposed in the middle of the layered filter body 3. Accordingly, the object to be processed can be additionally supplied to the layered filter body 3 through the sub supply port 42a downstream of the main supply port 11a, and thus the screw type concentration device 100 can perform the solid-liquid separation processing substantially throughout the layered filter body 3. Therefore, the throughput of the object to be processed can be increased by effectively utilizing the entire screw type concentration device 100. In addition, the object to be processed can be additionally supplied in the middle of the layered filter body, and thus the fluidity of the object to be processed that has decreased due to the solid-liquid separation processing can be improved. Consequently, it is possible to significantly reduce or prevent blockage of the screw type concentration device 100 (clogging of the layered filter body 3) due to the object to be processed.

According to the first embodiment, as described above, the opening area S1 of the sub supply port 42a is equal to the opening area S1 of the main supply port 11a. Accordingly, a relatively large additional supply of the object to be processed can be ensured, and thus the throughput can be increased between the main supply port 11a for the object to be processed and the discharge port 71 for the object to be processed, and the solid-liquid separation processing can be more effectively performed.

According to the first embodiment, as described above, the screw type concentration device 100 includes a pair of flanges 5 and 6 configured to sandwich the first pipe member 4 in a contact state from both sides in the axial direction of the rotary shaft 21. Accordingly, the first pipe member 4 can be easily attached via the flanges 5 and 6.

According to the first embodiment, as described above, the flange 5 is configured to face the fixed plate 31, and the flange 6 is configured to face the movable plate 33. Accordingly, the first pipe member 4 can be disposed at an arbitrary position between the fixed plate 31 and the movable plate 33 without changing the order in which the fixed plates 31 and the movable plates 33 are alternately aligned. Furthermore, a position at which the first pipe member 4 is disposed can be easily changed at a position between another fixed plate 31 and another movable plate 33.

According to the first embodiment, as described above, the first pipe member 4 integrally includes the tubular first portion 41 configured to extend in the axial direction of the rotary shaft 21 and the tubular second portion 42 including the sub supply port 42a and configured to protrude and extend from the outer surface of the first portion 41 in the direction that intersects with the axial direction. Accordingly, the object to be processed can be easily fed from the second portion 42 configured to extend in the direction away from the layered filter body 3 to the first portion 41.

According to the first embodiment, as described above, the first pipe member 4 is disposed at the position separated from the end of the layered filter body 3 on the main supply port 11a side by the distance of approximately one-third of the entire length of the layered filter body 3 in the axial direction of the rotary shaft 21. Accordingly, the object to be processed can be additionally supplied at the position separated from the end of the layered filter body 3 on the main supply port 11a side by a distance of one-third or more and one-half or less of the entire length of the layered filter body 3, which is a position at which the solid-liquid separation processing is substantially completed, and thus the throughput of the object to be processed can be further increased by effectively utilizing the entire screw type concentration device 100. In addition, it is possible to further significantly reduce or prevent blockage of the screw type concentration device 100 (clogging of the layered filter body 3) due to the object to be processed.

### [Second Embodiment]

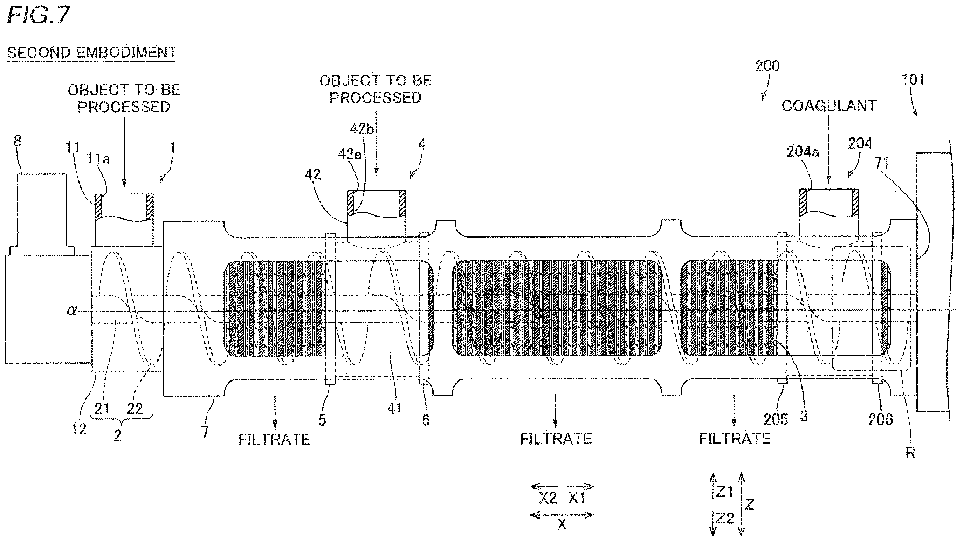

A second embodiment of the present invention is now described with reference to Fig. 7. In the second embodiment, a screw type concentration device 200 includes a second pipe member 204 in addition to the configuration of the first embodiment including the first pipe member 4.

### (Configuration of Screw Type Concentration Device)

As shown in Fig. 7, the screw type concentration device 200 according to the second embodiment includes the second pipe member 204 and flanges 205 and 206 respectively provided at both ends of the second pipe member 204 in a direction X. The screw type concentration device 200 is an example of a "solid-liquid separator" in the claims.

The second pipe member 204 has the same shape as the first pipe member 4, and thus description of the shape is omitted. Furthermore, the flanges 205 and 206 have the same shape as the flanges 5 and 6, and thus description of the shape is omitted.

The second pipe member 204 is a member that supplies a flocculant to the screw type concentration device 200 in the middle of a layered filter body 3. Therefore, the second pipe member 204 is provided in the middle of the layered filter body 3. Furthermore, the second pipe member 204 is provided downstream of a first pipe member 4. The second pipe member 204 is disposed in the vicinity of the end of a rotary shaft 21 on the discharge port 71 side.

The second pipe member 204 includes an auxiliary supply port 204a through which the flocculant is supplied. The auxiliary supply port 204a is provided at a position corresponding to a sub supply port 42a of the first pipe member 4.

On the discharge port 71 side (downstream side) of the second pipe member 204, an agitation region R (a portion surrounded by a two-dot chain line) in which an object to be processed is agitated by a screw 2 is provided. That is, a portion of the screw 2 is disposed downstream of the second pipe member 204, and the screw type concentration device 200 is configured to agitate, by the portion of the screw 2 disposed downstream of the end of the second pipe member 204 in a direction X1, the object to be processed and the flocculant supplied through the second pipe member 204 and floc the object to be processed before the object to be processed is discharged through the discharge port 71.

The remaining configurations of the second embodiment are similar to those of the first embodiment.

### (Effects of Second Embodiment)

According to the second embodiment, the following effects can be obtained.

According to the second embodiment, as described above, the screw type concentration device 200 includes the tubular second pipe member 204 including the auxiliary supply port 204a for the flocculant and disposed in the middle of the layered filter body 3 in addition to the first pipe member 4. Accordingly, when the flocculant is supplied, the flocculant can be supplied to the object to be processed, the moisture content of which has been lowered to a predetermined value while the fluidity is maintained, in the middle of the layered filter body 3, and thus the opportunity of contact between particles of solids of the object to be processed and particles of the flocculant can be increased, flocculating treatment can be more effectively performed, and the solid-liquid separation processing for the object to be processed can be more effectively performed.

According to the second embodiment, as described above, the second pipe member 204 includes the auxiliary supply port 204a through which the flocculant is supplied, and is disposed in the vicinity of the end of the rotary shaft 21 on the discharge port 71 side, and the agitation region R in which the object to be processed is agitated by the screw 2 is provided on the discharge port 71 side of the second pipe member 204. Accordingly, before the object to be processed reaches the discharge port 71, the flocculant and the object to be processed can be agitated in the agitation region R, and thus the object to be processed on which the flocculating treatment has been performed can be discharged through the discharge port 71.

The remaining effects of the second embodiment are similar to those of the first embodiment.

### [Third Embodiment]

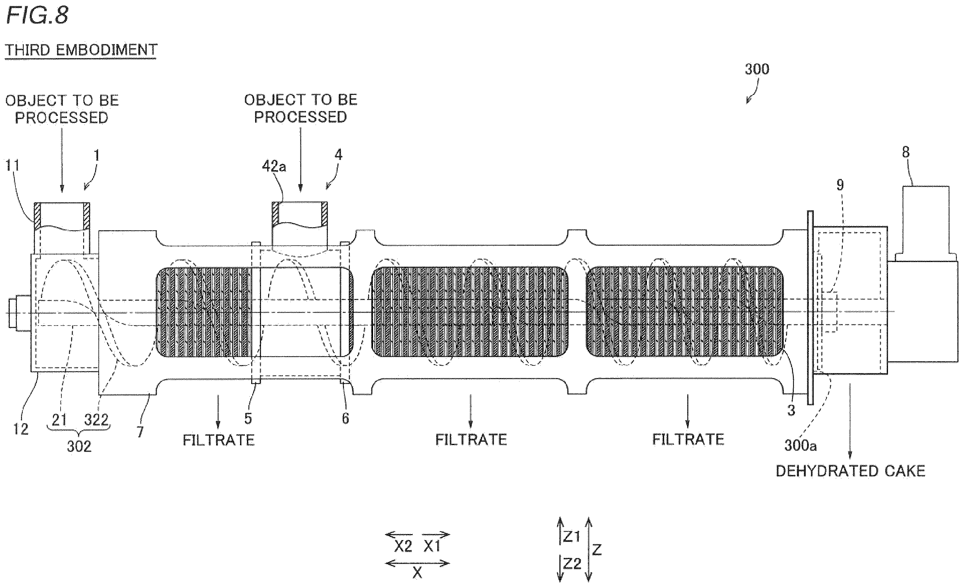

A third embodiment of the present invention is now described with reference to Fig. 8. In the third embodiment, a screw type dehydrator 300 that that performs dehydration processing on an object to be processed includes a first pipe member 4, unlike the first embodiment in which the screw type concentration device 100 that performs concentration processing on the object to be processed includes the first pipe member 4. The screw type dehydrator 300 is an example of a "solid-liquid separator" in the claims.

### (Configuration of Screw Type Dehydrator)

As shown in Fig. 8, the screw type dehydrator 300 according to the third embodiment includes a screw 302 and a back pressure plate 9.

The screw 302 includes a rotary shaft 21 and a blade 322. The screw 302 is connected to a motor 8 at the end (the end opposite to the end according to the first embodiment) of the rotary shaft 21 in a direction X1, and is configured to rotate by receiving a drive force from the motor 8.

The blade 322 is provided on the outer peripheral surface of the rotary shaft 21. In addition, the blade 322 is configured to extend helically in the axial direction (direction X) of the rotary shaft 21. Furthermore, the blade 322 includes one continuous blade. Unlike the blade 22 according to the first embodiment, the pitches of the blade 322 in the axial direction (direction X) of the rotary shaft 21 gradually decrease toward the downstream side (X1 direction side). Therefore, the screw 302 is configured to gradually increase a pressure on the object to be processed toward the downstream side by the blade 322.

The back pressure plate 9 is provided in the vicinity of the end of the rotary shaft 21 in the direction X1. The back pressure plate 9 is movable within a predetermined range in the direction X along the rotary shaft 21. The back pressure plate 9 is disposed at a predetermined position at which a transport path of the object to be processed is narrowed due to its movement. The back pressure plate 9 is configured to compress the object to be processed that has been conveyed to the vicinity of a discharge port 300a by the screw 302.

The remaining configurations of the third embodiment are similar to those of the first embodiment.

### (Effects of Third Embodiment)

According to the third embodiment, the following effects can be obtained.

According to the third embodiment, similarly to the first embodiment, the screw type dehydrator 300 includes the tubular first pipe member 4 including a sub supply port 42a for the object to be processed and disposed in the middle of a layered filter body 3. Thus, the throughput of the object to be processed can be increased by effectively utilizing the entire screw type dehydrator 300.

The remaining effects of the third embodiment are similar to those of the first embodiment.

### (Modified Examples)

The embodiments disclosed this time must be considered as illustrative in all points and not restrictive. The range of the present invention is not shown by the above description of the embodiments but by the scope of claims for patent, and all modifications (modified examples) within the meaning and range equivalent to the scope of claims for patent are further included.

For example, while the opening area of the sub supply port and the opening area of the main supply port are equal to each other in each of the aforementioned first to third embodiments, the present invention is not restricted to this. According to the present invention, the opening area of the sub supply port may alternatively be larger or smaller than the opening area of the main supply port.

While the first pipe member (and the second pipe member) is formed separately from the flanges in each of the aforementioned first to third embodiments, the present invention is not restricted to this. According to the present invention, the first pipe member (and the second pipe member) may alternatively be formed integrally with the flanges.

The flanges are provided on the first pipe member (and the second pipe member) in each of the aforementioned first to third embodiments.

While the flocculant is supplied from the second pipe member in the aforementioned second embodiment, the present invention is not restricted to this. According to the present invention, instead of the flocculant, washing water (maintenance water) may alternatively be supplied from the second pipe member. Alternatively, a plurality of (two) second pipe members may be provided to supply both the washing water and the flocculant.

While the second pipe member is disposed downstream of the first pipe member in the aforementioned second embodiment, the present invention is not restricted to this. According to the present invention, the second pipe member may alternatively be disposed upstream of the first pipe member.

While the first pipe member is disposed at the position separated from the end of the layered filter body on the main supply port side by the distance of approximately one-third of the entire length of the layered filter body in the axial direction of the rotary shaft in each of the aforementioned first to third embodiments, the present invention is not restricted to this. According to the present invention, the first pipe member may alternatively be disposed at any position as long as the first pipe member is disposed in the middle of the layered filter body. Note that, preferably, the first pipe member is disposed at a position separated from the end of the layered filter body on the main supply port side by a distance of one-fifth or more and four-fifths or less of the entire length of the layered filter body in the axial direction of the rotary shaft. More preferably, the first pipe member is disposed at a position separated from the end of the layered filter body on the main supply port side by a distance of one-fourth or more and three-fifths or less of the entire length of the layered filter body in the axial direction of the rotary shaft. Still more preferably, the first pipe member is disposed at a position separated from the end of the layered filter body on the main supply port side by a distance of one-third or more and one-half or less of the entire length of the layered filter body in the axial direction of the rotary shaft.

While the flange on the main supply port side of the first pipe member is configured to face the movable plate, and the flange on the discharge port side of the first pipe member is configured to face the fixed plate in each of the aforementioned first to third embodiments, the present invention is not restricted to this. According to the present invention, the flange on the main supply port side of the first pipe member may alternatively face the fixed plate, and the flange on the discharge port side of the first pipe member may alternatively face the movable plate.

While the first pipe member includes the first portion and the second portion in each of the aforementioned first to third embodiments, the present invention is not restricted to this. According to the present invention, the first pipe member may alternatively include only the first portion. In this case, a sub object-to-be-processed supply port is provided in the first portion.

While the rotary-body type dehydrator is provided as a dehydrator at the stage (downstream side) subsequent to the screw type concentration device in each of the aforementioned first and second embodiments, the present invention is not restricted to this. According to the present invention, a dehydrator of a type other than a rotary-body type concentration device such as a belt type or a centrifugal type dehydrator may alternatively be provided as a dehydrator at the stage (downstream side) subsequent to the screw type concentration device.

## Claims

1. A solid-liquid separator comprising:
a screw (2, 302) including a rotary shaft (21) and configured to feed a supplied object to be processed with rotation of the rotary shaft;
a main object-to-be-processed supply port (11a) for the object to be processed disposed in the vicinity of one end of the screw;
a discharge port (71) for the object to be processed provided in the vicinity of the other end of the screw;
a drive (8) configured to rotate the rotary shaft; and
a layered filter body (3) including a plurality of fixed plates (31) configured to surround the screw and a plurality of movable plates (33) each of which is disposed between adjacent ones of the plurality of fixed plates, the layered filter body (3) including a filtration groove (S) between the adjacent fixed plates; **characterized by**
a tubular first pipe member (4) including a sub object-to-be-processed supply port (42a) for the object to be processed and disposed in the middle of the layered filter body; and
a pair of flanges (5, 6, 205, 206) configured to sandwich the first pipe member from both sides in an axial direction of the rotary shaft in a contact state.

2. The solid-liquid separator according to claim 1, wherein an opening area of the sub object-to-be-processed supply port is equal to or larger than an opening area of the main object-to-be-processed supply port.

3. The solid-liquid separator according to claim 1 or 2, wherein
one of the pair of flanges is configured to face one of the plurality of fixed plates, and
the other of the pair of flanges is configured to face one of the plurality of movable plates.

4. The solid-liquid separator according to any one of claims 1 to 3, wherein the first pipe member integrally includes a tubular first portion (41) configured to extend in an axial direction of the rotary shaft and a tubular second portion (42) including the sub object-to-be-processed supply port and configured to protrude and extend from an outer surface of the first portion in a direction that intersects with the axial direction.

5. The solid-liquid separator according to any one of claims 1 to 4, comprising a tubular second pipe member (204) including an auxiliary supply port (204a) for a flocculant or washing water and disposed in the middle of the layered filter body in addition to the first pipe member.

6. The solid-liquid separator according to claim 5, wherein
the second pipe member includes the auxiliary supply port through which the flocculant is supplied, and is disposed in the vicinity of an end of the rotary shaft on the discharge port side, and
an agitation region (R) in which the object to be processed is agitated by the screw is provided on the discharge port side of the second pipe member.

7. The solid-liquid separator according to any one of claims 1 to 6, wherein the first pipe member is disposed at a position separated from an end of the layered filter body on the main object-to-be-processed supply port side by a distance of one-third or more and one-half or less of an entire length of the layered filter body in an axial direction of the rotary shaft.

## Patentansprüche

1. Fest-Flüssig-Trennvorrichtung, aufweisend:
eine Schnecke (2, 302), die eine Drehwelle (21) enthält, und so eingerichtet ist, dass sie einen bereitgestellten, zu verarbeitenden Gegenstand durch Drehung der Drehwelle vorschiebt;
einen Verarbeitungsgegenstand-Haupt-Eingangsstutzen (11a) für den zu verarbeitenden Gegenstand, der in der Nähe des einen Endes der Schnecke angeordnet ist;
einen Ausgangsstutzen (71) für den zu verarbeitenden Gegenstand, der in der Nähe des anderen Endes der Schnecke vorgesehen ist;
einen Antrieb (8), der so eingerichtet ist, dass er die Drehwelle dreht;
und
einen schichtartig aufgebauten Filterkörper (3) mit einer Mehrzahl von feststehenden Platten (31), die so eingerichtet sind, dass sie die Schnecke umgeben, und einer Mehrzahl von beweglichen Platten (33), von denen jede zwischen benachbarten der Mehrzahl von feststehenden Platten angeordnet ist, wobei der schichtartig aufgebaute Filterkörper (3) eine Filtrationsnut (S) zwischen den benachbarten feststehenden Platten aufweist;
**dadurch gekennzeichnet, dass**
ein rohrförmiges erstes Rohrelement (4), das einen Verarbeitungsgegenstand-Neben-Eingangsstutzen (42a) für den zu verarbeitenden Gegenstand enthält und in der Mitte des schichtartig aufgebauten Filterkörpers angeordnet ist; und
ein Paar von Flanschen (5, 6, 205, 206), die so eingerichtet sind, dass sie das erste Rohrelement in einem Kontaktzustand von beiden Seiten in axialer Richtung der Drehwelle sandwichartig umgeben.

2. Fest-Flüssig-Trennvorrichtung gemäß Anspruch 1, wobei eine Öffnungsfläche des Verarbeitungsgegenstand-Neben-Eingangsstutzen gleich oder größer ist als eine Öffnungsfläche des Verarbeitungsgegenstand-Haupt-Eingangsstutzen.

3. Fest-Flüssig-Trennvorrichtung gemäß Anspruch 1 oder 2, wobei
einer von dem Paar von Flanschen so eingerichtet ist, dass er einer der Mehrzahl von feststehenden Platten zugewandt ist, und
der andere von dem Paar von Flanschen so eingerichtet ist, dass er einer der Mehrzahl von beweglichen Platten zugewandt ist.

4. Fest-Flüssig-Trennvorrichtung gemäß irgendeinem der Ansprüche 1 bis 3, wobei das erste Rohrelement integral ausgebildet enthält
einen rohrförmigen ersten Teil (41), der so eingerichtet ist, dass er sich in einer axialen Richtung der Drehwelle erstreckt, und
einen rohrförmigen zweiten Teil (42), der den Verarbeitungsgegenstand-Neben-Eingangsstutzen enthält und so eingerichtet ist, dass er vorsteht und sich von einer Außenfläche des ersten Abschnitts in einer Richtung erstreckt, die sich mit der axialen Richtung schneidet.

5. Fest-Flüssig-Trennvorrichtung gemäß irgendeinem der Ansprüche 1 bis 4, aufweisend ein rohrförmiges zweites Rohrstück (204), das einen Hilfs-Eingangsstutzen (204a) für ein Flockungsmittel oder Waschwasser aufweist und zusätzlich zum ersten Rohrstück in der Mitte des schichtartig aufgebauten Filterkörper angeordnet ist.

6. Fest-Flüssig-Trennvorrichtung gemäß Anspruch 5, wobei
das zweite Rohrelement den Hilfs-Eingangsstutzen enthält, durch den das Flockungsmittel zugeführt wird, und in der Nähe eines Endes der Drehwelle auf der Ausgangsstutzen-Seite angeordnet ist, und
ein Rührbereich (R), in welchem der zu verarbeitende Gegenstand durch die Schnecke gerührt wird, auf der Ausgangsstutzen-Seite des zweiten Rohrelements vorgesehen ist.

7. Fest-Flüssig-Trennvorrichtung gemäß irgendeinem der Ansprüche 1 bis 6, wobei das erste Rohrelement an einer Stelle angeordnet ist, die von einem Ende des schichtartig aufgebauten Filterkörpers auf der Verarbeitungsgegenstand-Haupt-Eingangsstutzen-Seite beabstandet ist, durch einen Abstand von einem Drittel oder mehr und der Hälfte oder weniger der Gesamtlänge des schichtartig aufgebauten Filterkörpers in axialer Richtung der Drehwelle.

## Revendications

1. Séparateur solide - liquide comprenant :
une vis (2, 302) comprenant un axe rotatif (21) et configurée pour faire avancer un objet fourni à traiter avec la rotation de l'axe rotatif ;
un orifice d'approvisionnement en objet à traiter principal (11a) de l'objet à traiter disposé à proximité d'une extrémité de la vis ;
un orifice d'évacuation (71) de l'objet à traiter disposé à proximité de l'autre extrémité de la vis ;
un dispositif d'entraînement (8) configuré pour faire tourner l'axe rotatif ; et
un corps de filtre en couches (3) comprenant une pluralité de plaques fixes (31) configurées pour entourer la vis, et une pluralité de plaques mobiles (33) qui sont disposées entre les plaques adjacentes de la pluralité de plaques fixes, le corps de filtre en couches (3) comprenant une rainure de filtration (S) entre les plaques fixes adjacentes ; **caractérisé par**
un premier élément de canalisation tubulaire (4) comprenant un orifice d'approvisionnement en objet à traiter secondaire (42a) de l'objet à traiter, et disposé au milieu du corps de filtre en couches ; et
une paire de brides (5, 6, 205, 206) configurées pour prendre en sandwich le premier élément de canalisation à partir des deux côtés dans une direction axiale de l'axe rotatif dans un état de contact.

2. Séparateur solide - liquide selon la revendication 1, où la surface d'ouverture de l'orifice d'approvisionnement en objet à traiter secondaire, est égal ou supérieure à la surface d'ouverture de l'orifice d'approvisionnement en objet à traiter principal.

3. Séparateur solide - liquide selon la revendication 1 ou 2, où
l'une de la paire de brides est configurée pour faire face à l'une de la pluralité de plaques fixes, et
l'autre de la paire de brides est configurée pour faire face à l'une de la pluralité de plaques mobiles.

4. Séparateur solide - liquide selon l'une quelconque des revendications 1 à 3, où le premier élément de canalisation comprend d'une pièce une première partie tubulaire (41) configurée pour s'étendre dans la direction axiale de l'axe rotatif, et une seconde partie tubulaire (42) comprenant l'orifice d'approvisionnement en objet à traiter secondaire, et configurée pour faire saillie et s'étendre à partir d'une surface extérieure de la première partie dans une direction qui coupe la direction axiale.

5. Séparateur solide - liquide selon l'une quelconque des revendications 1 à 4, comprenant un second élément de canalisation tubulaire (204) comprenant un orifice d'approvisionnement auxiliaire (204a) d'un floculant ou d'une eau de lavage, et disposé au milieu du corps de filtre en couches en plus du premier élément de canalisation.

6. Séparateur solide - liquide selon la revendication 5, où
le second élément de canalisation comprend l'orifice d'approvisionnement auxiliaire à travers lequel est fourni le floculant, et est disposé à proximité d'une extrémité de l'axe rotatif du côté de l'orifice d'évacuation, et
une région d'agitation (R) dans laquelle l'objet à traiter est agité par la vis, est prévue du côté de l'orifice d'évacuation du second élément de canalisation.

7. Séparateur solide - liquide selon l'une quelconque des revendications 1 à 6, où le premier élément de canalisation est disposé à une position séparée d'une extrémité du corps de filtre en couches du côté de l'orifice d'approvisionnement en objet à traiter principal, d'une distance égale ou supérieure à un tiers, et égale ou inférieure à la moitié de la longueur totale du corps de filtre en couches dans la direction axiale de l'axe rotatif.
